Europäisches Patentamt

**European Patent Office**

Office européen des brevets

(19)

(11) Publication number: **0 187 124**
A1

(12) # EUROPEAN PATENT APPLICATION

(21) Application number: **85830301.9**

(51) Int. Cl.⁴: **B 27 K 3/10,** B 23 Q 1/00

(22) Date of filing: **06.12.85**

(30) Priority: **13.12.84 IT 5416084 U**

(71) Applicant: **EDILCHIMICA ITALIA S.r.l., Corso Francia 262, I-10146 Torino (IT)**

(43) Date of publication of application: **09.07.86 Bulletin 86/28**

(72) Inventor: **D'Alo', Francesco, Corso Francia 262, I-10146 Torino (IT)**

(84) Designated Contracting States: **AT BE CH DE FR GB IT LI LU NL SE**

(74) Representative: **Jacobacci, Filippo et al, c/o JACOBACCI-CASETTA & PERANI S.n.c. Via Alfieri, 17, I-10121 Torino (IT)**

(54) **Apparatus for injecting disinfectant and/or protective liquids into structures of wood and other materials.**

(57) Apparatus for injecting disinfectant and/or protective liquids into structures of wood or stone.

The apparatus comprises a portable drill (1) having a chuck (8) with an axial hole (11), and carrying a twist bit (13) with an inlet duct (12) which is aligned with the axial hole (11) of the chuck (8) and communicates with ducts (13) opening at the tip of the bit. Means (4, 3, 3a, 5) are provided for supplying the disinfectant and/or protective liquid under pressure to the axial hole (11) of the chuck (8) at a regulable flow rate, so as to injuect the liquid into the structure through the bit (13) used for drilling.

FIG. 1

0187124

- 1 -

Apparatus for injecting disinfectant and/or protective
liquids into structures of wood and other materials

The present invention relates to apparatus for
injecting disinfectant and/or protective liquids into
structures of wood and other materials, for example
stone.

According to the prior art, it is necessary to carry
out two separate operations in order to inject liquids
into such materials, more precisely a drilling
operation and a subsequent step of injecting the liquid
into the hole previously made.

The apparatus which constitutes the subject of the
present invention has the object of simplifying these
operations and of reducing the time and hence the
relative costs.

In order to achieve this object, the apparatus of the
present invention is characterised mainly in that it
comprises, in combination:
    - a portable drill having a chuck with an axial
hole,
    - a twist bit carried by the chuck and having an
inlet duct which is aligned with the axial hole of
the chuck and communicates with ducts formed in the
helical part of the bit and opening at its tip,
    - means for supplying a disinfectant and/or
protective liquid under pressure to the axial hole of
the chuck, and
    - means associated with the handle of the
portable drill for controlling the flow of the
pressurised liquid.

- 2 -

By virtue of this characteristic, the apparatus according to the present invention allows the injection to be carried out simultaneously with the drilling step, thus achieving a substantial saving in time and costs.

Further characteristics and advantages of the present invention will become apparent from the description which follows with reference to the appended drawings, provided purely by way of non-limiting example, in which:

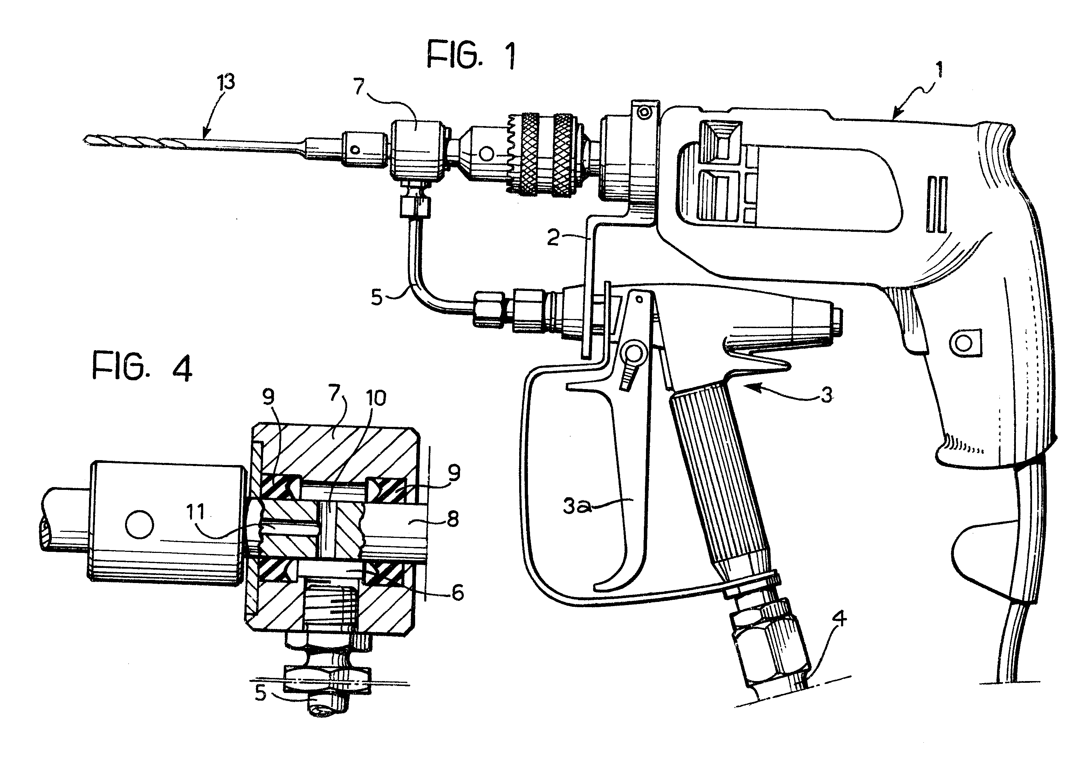

Figure 1 is an elevational view of apparatus according to the present invention,

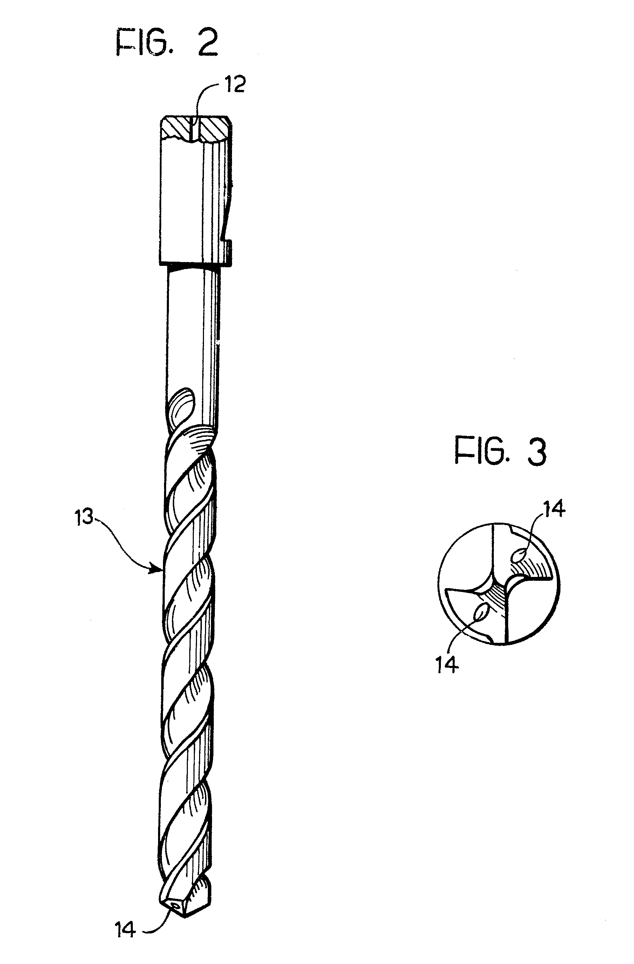

Figure 2 is a detail of the bit on an enlarged scale,

Figure 3 is an end view of the bit illustrated in Figure 2, on an enlarged scale, and

Figure 4 is a sectional view of a detail of Figure 1 on an enlarged scale.

In the drawings, a portable drill is generally indicated 1 to which a spray gun, generally indicated 3 and provided with a trigger 3a for controlling the flow of fluid passing through the gun, is fixed by means of a bracket 2.

A tube for supplying pressurised fluid to the gun 3 is indicated 4.

The fluid could be a disinfectant and/or protective liquid intended for injection into structures of wood, stone or other materials.

- 3 -

A delivery duct 5 connects the gun 3 to an annular chamber 6 formed in a feed ring 7 carried by the structure of the drill 1 and surrounding the chuck 8 of the drill itself.

The annular chamber 6 is defined axially by washers 9 which ensure sealing between the feed ring 7 and the chuck 8, and communicates through radial holes 10 with an axial hole 11 of the chuck 8.

The hole 11 is aligned with an inlet hole 12 formed in a twist bit 13 connected in known manner to the chuck 8.

The hole 12 communicates with ducts 14 formed in the helical part of the bit and opening at its tip.

In use of the device, a disinfectant and/or protective liquid is supplied to the holes 14 of the bit during the drilling operation, thereby allowing the liquid to be injected into the material simultaneously with the drilling.

- 4 -

CLAIMS

1.   Apparatus  for  injecting  disinfectant  and/or protective  liquids into structures  of wood  and  other materials,  characterised  in  that  it  comprises,  in combination,

   -  a  portable  drill  (1)  having a chuck (8)with an axial hole (11),

   -  a  twist bit (13)  carried by  the  chuck  (8) and having an inlet duct (12) which is aligned with  the axial hole (11)  of the chuck (8) and communicates  with ducts  (14)  formed in the helical part of the bit  (13) and  opening at its tip,

   -  means  (4, 3, 5)  for supplying  a  disinfectant and/or  protective liquid  under pressure to  the  axial hole (11)  of the chuck (8),  and

   -  means  (3a)  associated with the handle  of  the portable  drill  (1)  for controlling the  flow  of  the pressurised liquid.

2.   Apparatus  according to Claim 1,  characterised  in that  the  axial  hole  (11)  of  the  chuck  (8) communicates  through radial holes (10) with  an  annular chamber  (6)  formed  in  a  feed  ring (7)  sealingly surrounding  the  chuck,  the  annular  chamber  (6) communicating  through  a connector with a  supply  tube (4,5) for the pressurised liquid

3.   Apparatus  according  to  Claims  1  and  2, characterised  in that a valve (3) is connected  in  the supply tube (4, 5) and is supported by the structure  of the drill (1) and provided with a trigger control (3a).

FIG. 1

13

7

1

2

5

3

3a

4

FIG. 4

9 7 10

9

11

8

6

5

1/2

0187124

FIG. 2

12

13

14

FIG. 3

14

14

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 048 353 (J.K. STEWART et al.)<br>* Whole document * | 1,2 | B 27 K 3/10<br>B 23 Q 1/00 |
| X | GB-A- 522 567 (H. SCHAD)<br>* Page 2, lines 11-75; claims 1,3-5,10 * | 1-3 | |
| X | US-A-3 294 182 (A.H. FILANDER et al.)<br>* Column 1, lines 15-68; column 5, lines 35-50; claims * | 1-3 | |
| X | NASA TECHNICAL BRIEFS, vol. 1, no. 2, summer 1976, page 275, Washington, D.C., US; F.E. RANSOM: "Method of removing drilling chips"<br>* Whole article * | 1-3 | TECHNICAL FIELDS SEARCHED (Int. Cl.4) |
| A | GB-A-1 128 260 (SIKKENS GROEP)<br>* Claims * | 1-3 | B 27 K<br>B 23 Q |

The present search report has been drawn up for all claims

| Place of search | Date of completion of the search | Examiner |
|---|---|---|
| THE HAGUE | 26-03-1986 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82